(19) Europäisches Patentamt / European Patent Office / Office européen des brevets

(11) **EP 4 184 426 A1**

(12) **EUROPEAN PATENT APPLICATION**

(43) Date of publication:
**24.05.2023 Bulletin 2023/21**

(21) Application number: **21209476.7**

(22) Date of filing: **22.11.2021**

(51) International Patent Classification (IPC):
**G06T 5/00** *(2006.01)*    **G06T 5/10** *(2006.01)*

(52) Cooperative Patent Classification (CPC):
**G06T 5/006; G06T 5/10;** G06T 2207/20056;
G06T 2207/30148

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ASML Netherlands B.V.**
**5500 AH Veldhoven (NL)**

(72) Inventors:
• **KOOLEN, Armand Eugene Albert**
**5500 AH Veldhoven (NL)**

• **COENE, Willem Marie Julia Marcel**
**5500 AH veldhoven (NL)**
• **KONIJNENBERG, Alexander Prasetya**
**5500 AH Veldhoven (NL)**
• **TUKKER, Teunis Willem**
**5500 AH Veldhoven (NL)**
• **DEN BOEF, Arie Jeffrey**
**55oo AH Veldhoven (NL)**

(74) Representative: **ASML Netherlands B.V.**
**Corporate Intellectual Property**
**P.O. Box 324**
**5500 AH Veldhoven (NL)**

(54) **METROLOGY METHOD AND DEVICE**

(57)      Disclosed is a metrology method and associated devices. The method comprises obtaining a first image, said first image being subject to one or more non-isoplanatic aberrations of an optical system used to capture said image; and non-iteratively correcting said first image for the effect of said one or more non-isoplanatic aberrations by performing one or both of: a field non-isoplanatic correction operation in field space for said first image, said field space corresponding to a field plane of the optical system; and a pupil non-isoplanatic correction operation in pupil space for said first image, said pupil space corresponding to a pupil plane of the optical system. Said one or more non-isoplanatic aberrations comprise a class of non-isoplanatic aberrations describable as a convolution combined with an object distortion and/or a pupil distortion.

Fig. 7

EP 4 184 426 A1

**Description**

FIELD

The present invention relates to a metrology method and device which may, for example, be used for determining a characteristic of structures on a substrate.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low $k_1$.

In lithographic processes, it is desirable to make frequently measurements of the structures created, e.g., for process control and verification. Various tools for making such measurements are known, including scanning electron microscopes or various forms of metrology apparatuses, such as scatterometers. A general term to refer to such tools may be metrology apparatuses or inspection apparatuses.

Holographic metrology tools are known which enable phase information to be extracted from a holographic image. International patent application WO2019197117A1, incorporated herein by reference, discloses a method and metrology apparatus based on a dark field digital holographic microscope (df-DHM) to determine a characteristic, e.g., overlay, of a structure manufactured on a substrate.

Metrology tools may have lens systems which comprise aberrations which should be corrected. This is particularly the case if the lens systems are simplified, e.g., to reduce their cost and/or complexity. Some of these aberrations can be isoplanatic, others can be non-isoplanatic. It would be desirable to correct at least some of these aberrations, even where the aberrations are non-isoplanatic.

SUMMARY

Embodiments of the invention are disclosed in the claims and in the detailed description.

In a first aspect of the invention there is provided a metrology method comprising: obtaining a first image, said first image being subject to one or more non-isoplanatic aberrations of an optical system used to capture said image; and non-iteratively correcting said first image for the effect of at least said one or more non-isoplanatic aberrations by performing one or both of: a field non-isoplanatic correction operation in field space for said first image, said field space corresponding to a field plane of the optical system; and a pupil non-isoplanatic correction operation in pupil space for said first image, said pupil space corresponding to a pupil plane of the optical system; wherein said one or more non-isoplanatic aberrations comprise a class of non-isoplanatic aberrations describable as a convolution combined with an object distortion and/or a pupil distortion.

In a second aspect of the invention there is provided an objective lens system comprising:
A plurality of non-planar optical elements or lens elements numbering fewer than non-planar optical elements or five lens elements; and negligible non-isoplanatic aberrations other than those of said class describable as a convolution combined with an object distortion and/or a pupil distortion.

In a further aspect of the invention, there is provided a computer program comprising program instructions operable to perform the method of the first aspect when run on a suitable apparatus, and associated processing apparatus and metrology device.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 is a schematic illustration of a scatterometry apparatus;
- Figure 5 comprises (a) a schematic diagram of a dark field scatterometer for use in measuring targets according to embodiments of the invention using a first pair of illumination apertures, (b) a detail of diffraction spectrum of a target grating for a given direction of illumination (c) a second pair of illumination apertures providing further illumination modes in using the scatterometer for diffraction based overlay measurements and (d) a third pair of illumination apertures combining the first and second pair of apertures;
- Figure 6 is a flowchart of a method of non-iteratively correcting said an image for the effect of one or more non-isoplanatic aberrations according to an embodiment;
- Figure 7 is a schematic illustration of a lens system which may be used as an objective lens system of a precision metrology tool in combination with the aberration correction methods disclosed herein; and
- Figure 8 depicts a block diagram of a computer system for controlling a system and/or method as disclosed herein.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

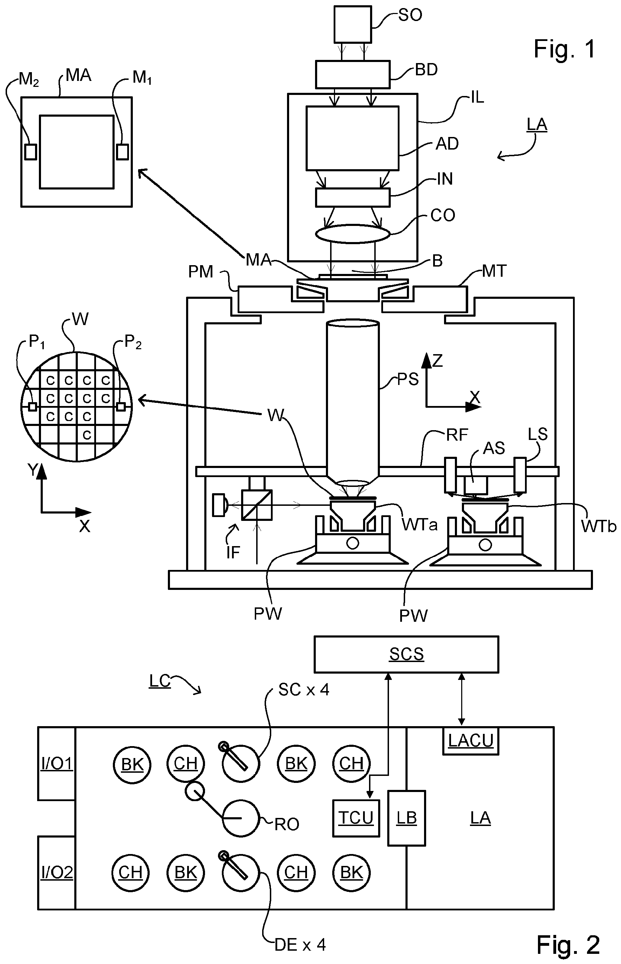

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

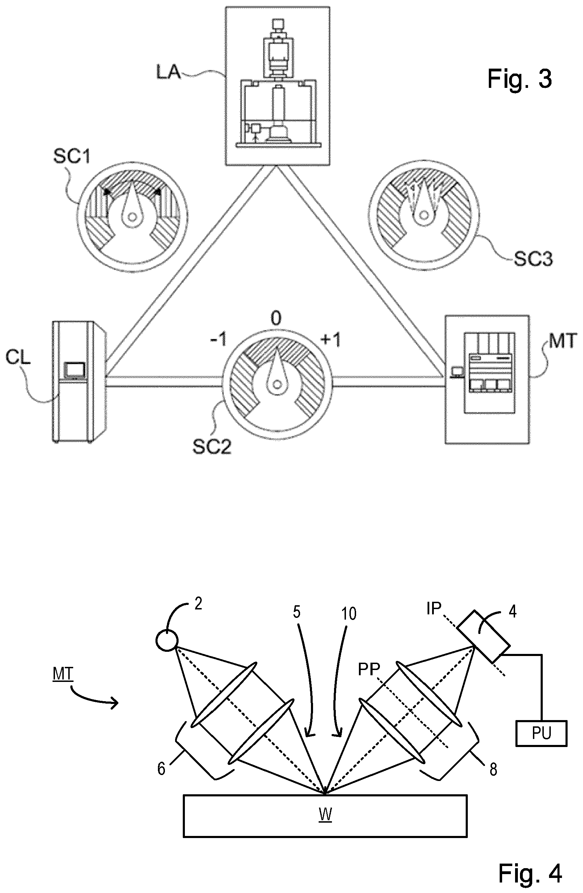

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 3. One of these systems is the lithographic apparatus LA which is (virtually) connected to a metrology tool MET (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MET) to predict whether defects may be present due to e.g. sub-optimal processing (depicted in Figure 3 by the arrow pointing "0" in the second scale SC2).

The metrology tool MET may provide input to the computer system CL to enable accurate simulations and predictions, and may provide feedback to the lithographic apparatus LA to identify possible drifts, e.g. in a calibration status of the lithographic apparatus LA (depicted in Figure 3 by the multiple arrows in the third scale SC3).

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometer illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from from multiple gratings using light from soft x-ray and visible to near-IR wave range.

A metrology apparatus, such as a scatterometer MT, is depicted in Figure 4. It comprises a radiation source 2 (e.g., a broadband (white light) radiation source) which projects radiation 5 onto a substrate W via projection optical system 6. The reflected or scattered radiation 8 is collected by an objective lens system 8 and passed to a detector 4. The scattered radiation 8 as detected by detector 4 can then be processed by processing unit PU. Also shown is a pupil plane PP and image plane IP of the objective lens system 8. The terms "pupil plane" and "field plane" within this specification may refer to respectively these planes or any planes conjugate thereto. Such a scatterometer may be configured as a normal-incidence scatterometer or (as shown) an oblique-incidence scatterometer. In some embodiments, the projection optical system 6 and objective lens system 8 are combined; i.e., the same objective lens system is used to both illuminate the substrate and collect the scattered radiation therefrom.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

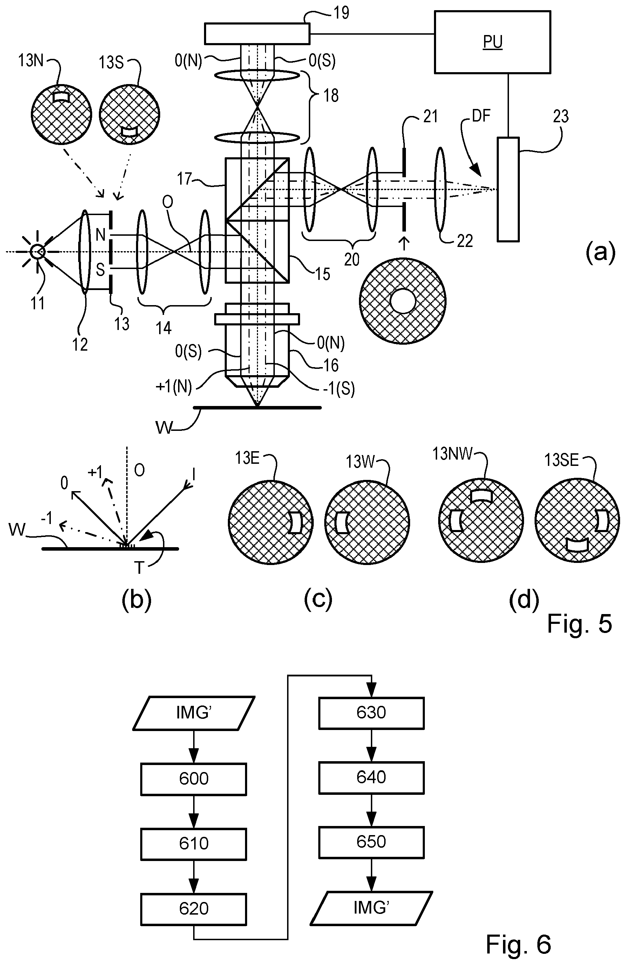

Figure 5(a) presents an embodiment of a metrology apparatus and, more specifically, a dark field scatterometer. A target T and diffracted rays of measurement radiation used to illuminate the target are illustrated in more detail in Figure 5(b). The metrology apparatus illustrated is of a type known as a dark field metrology apparatus. The metrology apparatus may be a stand-alone device or incorporated in either the lithographic apparatus LA, e.g., at the measurement station, or the lithographic cell LC. An optical axis, which has several branches throughout the apparatus, is represented by a dotted line O. In this apparatus, light emitted by source 11 (e.g., a xenon lamp) is directed onto substrate W via a beam splitter 15 by an optical system comprising lenses 12, 14 and objective lens 16. These lenses are arranged in a double sequence of a 4F arrangement. A different lens arrangement can be used, provided that it still provides a substrate image onto a detector, and simultaneously allows for access of an intermediate pupil-plane for spatial-frequency filtering. Therefore, the angular range at which the radiation is incident on the substrate can be selected by defining a spatial intensity distribution in a plane that presents the spatial spectrum of the substrate plane, here referred to as a (conjugate) pupil plane. In particular, this can be done by inserting an aperture plate 13 of suitable form between lenses 12 and 14, in a plane which is a back-projected image of the objective lens pupil plane. In the example illustrated, aperture plate 13 has different forms, labeled 13N and 13S, allowing different illumination modes to be selected. The illumination system in the present examples forms an off-axis illumination mode. In the first illumination mode, aperture plate 13N provides off-axis from a direction designated, for the sake of description only, as 'north'. In a second illumination mode, aperture plate 13S is used to provide similar illumination, but from an opposite direction, labeled 'south'. Other modes of illumination are possible by using different apertures. The rest of the pupil plane is desirably dark as any unnecessary light outside the desired illumination mode will interfere with the desired measurement signals.

As shown in Figure 5(b), target T is placed with substrate W normal to the optical axis O of objective lens 16.

The substrate W may be supported by a support (not shown). A ray of measurement radiation I impinging on target T from an angle off the axis O gives rise to a zeroth order ray (solid line 0) and two first order rays (dot-chain line +1 and double dot-chain line -1). It should be remembered that with an overfilled small target, these rays are just one of many parallel rays covering the area of the substrate including metrology target T and other features. Since the aperture in plate 13 has a finite width (necessary to admit a useful quantity of light, the incident rays I will in fact occupy a range of angles, and the diffracted rays 0 and +1/-1 will be spread out somewhat. According to the point spread function of a small target, each order +1 and -1 will be further spread over a range of angles, not a single ideal ray as shown. Note that the grating pitches of the targets and the illumination angles can be designed or adjusted so that the first order rays entering the objective lens are closely aligned with the central optical axis. The rays illustrated in Figure 5(a) and 3(b) are shown somewhat off axis, purely to enable them to be more easily distinguished in the diagram.

At least the 0 and +1 orders diffracted by the target T on substrate W are collected by objective lens 16 and directed back through beam splitter 15. Returning to Figure 5(a), both the first and second illumination modes are illustrated, by designating diametrically opposite apertures labeled as north (N) and south (S). When the incident ray I of measurement radiation is from the north side of the optical axis, that is when the first illumination mode is applied using aperture plate 13N, the +1 diffracted rays, which are labeled +1(N), enter the objective lens 16. In contrast, when the second illumination mode is applied using aperture plate 13S the -1 diffracted rays (labeled 1(S)) are the ones which enter the lens 16.

A second beam splitter 17 divides the diffracted beams into two measurement branches. In a first measurement branch, optical system 18 forms a diffraction spectrum (pupil plane image) of the target on first sensor 19 (e.g. a CCD or CMOS sensor) using the zeroth and first order diffractive beams. Each diffraction order hits a different point on the sensor, so that image processing can compare and contrast orders. The pupil plane image captured by sensor 19 can be used for focusing the metrology apparatus and/or normalizing intensity measurements of the first order beam. The pupil plane image can also be used for many measurement purposes such as reconstruction.

In the second measurement branch, optical system 20, 22 forms an image of the target T on sensor 23 (e.g. a CCD or CMOS sensor). In the second measurement branch, an aperture stop 21 is provided in a plane that is conjugate to the pupil-plane. Aperture stop 21 functions to block the zeroth order diffracted beam so that the image of the target formed on sensor 23 is formed only from the -1 or +1 first order beam. The images captured by sensors 19 and 23 are output to processor PU which processes the image, the function of which will depend on the particular type of measurements being performed. Note that the term 'image' is used here in a broad sense. An image of the grating lines as such will not be formed, if only one of the -1 and +1 orders is present.

The particular forms of aperture plate 13 and field stop 21 shown in Figure 5 are purely examples. In another embodiment of the invention, on-axis illumination of the targets is used and an aperture stop with an off-axis aperture is used to pass substantially only one first order of diffracted light to the sensor. In yet other embodiments, 2nd, 3rd and higher order beams (not shown in Figure 5) can be used in measurements, instead of or in addition to the first order beams.

In order to make the measurement radiation adaptable to these different types of measurement, the aperture plate 13 may comprise a number of aperture patterns formed around a disc, which rotates to bring a desired pattern into place. Note that aperture plate 13N or 13S can only be used to measure gratings oriented in one direction (X or Y depending on the set-up). For measurement of an orthogonal grating, rotation of the target through 90° and 270° might be implemented. Different aperture plates are shown in Figures 5(c) and (d). The use of these, and numerous other variations and applications of the apparatus are described in prior published applications, mentioned above.

The metrology tool just described requires low aberrations (for good machine-to-machine matching for example) and a large wavelength range (to support a large application range for example). Machine-to-machine matching depends (at least partly) on aberration variation of the (microscope) objective lenses being sufficiently small, a requirement that is challenging and not always met. This also implies that it is essentially not possible to enlarge the wavelength range without worsening the optical aberrations. Furthermore, the cost of goods, the volume and/or the mass of a tool is substantial, limiting the possibility of increasing the wafer sampling density (more points per wafer, more wafers per lot) by means of parallelization by providing multiple sensors to measure the same wafer simultaneously.

To address at least some of these issues, a metrology apparatus which employs a computational imaging/phase retrieval approach has been described in US patent publication US2019/0107781, which is incorporated herein by reference. Such a metrology device may use relatively simple sensor optics with unexceptional or even relatively mediocre aberration performance. As such, the sensor optics may be allowed to have aberrations, and therefore produce a relatively aberrated image. Of course, simply allowing larger aberrations within the sensor optics will have an unacceptable impact on the image quality unless something is done to compensate for the effect of these optical aberrations. Therefore, computational imaging techniques are used to compensate for the negative effect of relaxation on aberration performance within the sensor optics.

A known type of metrology which may be used *inter alia* in lithography control and monitoring applications is digital holographic microscopy, in particular dark field digital holographic microscopy. Digital holographic microscopy is an imaging technology that combines holography with microscopy. Different from other microscopy methods that record projected images of an object, digital holographic microscopy records holograms formed by interference between object radiation obtained by irradiation of a three-dimensional (3D) object with reference radiation that is coherent with the object radiation. Images may be captured using, for example a charge coupled device (CCD) or a complementary metal oxide semiconductor (CMOS). Since the object radiation is radiation scattered from the object, wave-front of the object radiation is therefore modulated or shaped by the object. Said scattered radiation may comprise reflected radiation, diffracted radiation, or transmitted radiation. Therefore, the wavefront of the object radiation carries information of the irradiated object, e.g., 3D shape information. Based on the captured images of holograms, images of the object can be numerically reconstructed by using a computer reconstruction algorithm. An important advantage of hologram based metrology over intensity based metrology, is that hologram based metrology allows both intensity and phase information of an object to be obtained, without the need for the computationally intensive phase retrieval techniques described in the aforementioned US2019/0107781. With additional phase information, sensor aberrations may be corrected therefore also enabling a simpler sensor optical setup to be used.

The international patent application WO2019197117A1, incorporated herein by reference, discloses a method and metrology apparatus based on a dark field digital holographic microscope (df-DHM) to determine a characteristic, e.g., overlay, of a structure manufactured on a substrate. The df-DHM in described therein comprises a reference optical unit which is used to provide two reference radiation beams (the reference radiation). The two reference radiation beams may be respectively paired with two corresponding portions of object radiation (e.g., scattered radiation beams from a target), such as a +1 diffraction order and a -1 diffraction order. The two scattered-reference beam pairs are used sequentially to form two interference patterns (i.e., one corresponding to the +1 diffraction order and the other corresponding to the -1 diffraction order). The first and second interference patterns are used to determine the characteristic of the structure.

Simplifying the illumination and detection sensor optics of some of the metrology devices described above, and/or making the optics more compact, elevates the sensor's Petzval sum and may lead to large by-design, and possibly also as-manufactured, aberration levels. Such aberration may comprise, for example 4D aberration, where 4D aberration refers to the fact that each object point (described by a 2D coordinate vector) has its own 2D aberration function (and therefore its own PSF). This is the most general form of non-isoplanatic aberrations.

. For a specific subset of 4D aberrations, it is possible to correct for aberrations by simple deconvolution operations. This specific subset of 4D aberrations comprises one or both of the following categories of aberrations: isoplanatic field aberrations (dependent on pupil coordinate) and/or isoplanatic pupil aberrations (dependent on field coordinate). For such case, and assuming coherent imaging regimes, such as may be implemented using a df-DHM or other coherent holographic microscope, the aberration correction may be performed by means of simple deconvolution (or other correction) based on two 2D-Fast Fourier Transforms (FFTs). Briefly, such an approach may comprise the following steps:

- Perform forward FFT of hologram and select sideband.
- Deconvolution in pupil space representation to correct isoplanatic pupil aberrations.
- Perform backward FFT to field representation.
- Deconvolution in field representation to correct isoplanatic field aberrations.

This method works only for a certain restricted subset of 4D aberrations, but not all arbitrary 4D aberrations.

In an incoherent regime (e.g., using a tool such as illustrated in Figure 5 and computational imaging), the only aberration corrections possible are field plane corrections (e.g., using deconvolution in the field plane), as the pupil plane (or Fourier plane, or simply "pupil") is not accessible (the latter would require the knowledge of the complex field), such that it is possible to transform between field space and pupil space by a forward or backward 2D Fourier transform.

However, these approaches can only be used for isoplanatic aberration correction due to physics and/or time constraint limitations. Isoplanatic aberrations in this context refers to aberrations which are dependent only on pupil plane coordinates, and/or dependent only on field plane coordinates. It may be appreciated that the former of these definitions, i.e., aberrations which are dependent only on pupil plane coordinates, is the more common definition of isoplanatic and it is well known that deconvolutions can be applied to correct for such aberrations. However, the same approach also works for aberrations dependent only on field coordinates. By extension, in the context of this disclosure, non-isoplanatic aberrations refers to aberrations which are dependent on both pupil plane coordinates and field plane coordinates (each object point has different point spread function (PSF) in field plane).

Because of this, present aberration correction methods have only a very limited aberration correction potential; the concepts disclosed herein, by contrast, have a greater aberration correction potential as they include correction for some non-isoplanatic aberrations.

In particular, computationally distorting the fields in both the field plane and pupil plane allows correction of a certain class of non-isoplanatic aberrations in a computationally inexpensive way. Such a class of non-isoplanatic aberrations may comprise non-isoplanatic aberrations describable as a convolution combined with an object and/or pupil distortion.

As such, the most general form of non-isoplanatic aberrations that can be efficiently corrected for using per-plane distortions, is describable by an aberration function that is the difference of an aberrated phase function and an unaberrated linear phase function, the aberrated phase function being a product of a distorted field description and a distorted pupil description, the distorted field description being a function of field coordinates and the distorted pupil description being a function of pupil coordinates; i.e., is given by:

$$W(\vec{R},\vec{G}) = \vec{R}'(\vec{R}) \cdot \vec{G}'(\vec{G}) - \vec{R} \cdot \vec{G}$$

where $W(\vec{R}, \vec{G})$ denotes the aberration function for an object point or field point $\vec{R}$ and pupil coordinate $\vec{G}$ (it is this dependence on both object point and pupil coordinate which distinguishes the aberrations as non-isoplanatic in this context). Its Fourier transform yields the PSF for an object point $\vec{R}$. In the isoplanatic case, W does not depend on $\vec{R}$; the dependence on $\vec{R}$ and $\vec{G}$ implies non-isoplanatism. $\vec{G}$ denotes the pupil coordinate, and $\vec{G}'(\vec{G})$ denotes the distorted pupil (i.e., each pupil point $\vec{G}$ is mapped to a different point $\vec{G}'$). Similarly, $\vec{R}$ denotes the object coordinate (i.e. field coordinate), and $\vec{R}'(\vec{R})$ describes the distorted object/field (e.g. each field point $\vec{R}$ is mapped on a different field point $\vec{R}'$). In other words, for an unaberrated system, a point source at $\vec{R}$ yields in the pupil a linear phase function $\vec{R} \cdot \vec{G}$. If the object and pupil planes are distorted, a point source at $\vec{R}$ yields in the pupil the phase function $\vec{R}'(\vec{R}) \cdot \vec{G}'(\vec{G})$. The difference between these two phase functions is the aberration function $W(\vec{R}, \vec{G})$ for a certain object point $\vec{R}$.

As such, disclosed herein is a metrology method comprising: obtaining a first image, said first image being subject to one or more non-isoplanatic aberrations of an optical system used to capture said image; and non-iteratively correcting said first image for the effect of said one or more non-isoplanatic aberrations by performing one or both of:

a field non-isoplanatic correction operation in field space for said first image, said field space corresponding to a field plane of the optical system; and a pupil non-isoplanatic correction operation in pupil space for said first image, said pupil space corresponding to a pupil plane of the optical system;
wherein said one or more non-isoplanatic aberrations comprise a class of non-isoplanatic aberrations describable as a convolution combined with an object and/or pupil distortion.

In a proposed approach, non-isoplanatic aberration correction may be realized by a sequence of steps as illustrated in the flowchart of Figure 6, at least in the coherent regime (e.g., using a holography tool in the digital holographic microscope (DHM)). These steps may comprise in one implementation, by means of example::

- Step 600: Performing a Fourier transform (e.g., FFT) on a first image IMG (e.g., a hologram) and select one of both sidebands.
- Step 610: performing a pupil non-isoplanatic correction operation (e.g., a distortion correction) in pupil space (or a pupil representation) to correct a second class of non-isoplanatic aberrations wherein said second class of non-isoplanatic aberrations comprise said non-isoplanatic aberrations which are correctable by distortion in said pupil space.
- Step 620: performing a pupil-plane isoplanatic correction operation (e.g., a deconvolution) in pupil space representation to correct a second class of isoplanatic aberrations correctable in pupil space.
- Step 630: performing a backward Fourier transform (e.g., FFT) to a field representation
- Step 640: performing a field non-isoplanatic correction operation (e.g., a distortion correction) in field space to correct a first class of non-isoplanatic aberrations, wherein said first class of non-isoplanatic aberrations are correctable in field space (a field plane representation of the optical system used to capture the first image).
- Step 650: performing a field isoplanatic correction operation (e.g., a deconvolution) in field space (or a field representation) to correct a first class of isoplanatic aberrations, wherein said first class of non-isoplanatic aberrations comprise said non-isoplanatic aberrations which are correctable by distortion in said field space.
- In an alternative implementation, the above steps of the respective distortion corrections in pupil space (step 610) and in field space (step 640) can be combined in a single step.

The result of such a method may be a corrected image IMG' or, more specifically, an aberration-corrected complex-valued field amplitude $\phi_{obj}(\vec{R})$.

Note that operations 620 and 640 for the specific case of incoherent imaging may be adapted versions their counterparts in the case of coherent imaging, such that they do not have an identical algorithmic implementation.

Because of the order of the above steps (obviously, the distortion correction and deconvolution steps may be done in any order in each space), the computational load in terms of number of FFTs performed comprises two FFTs, which is the same as for state-of-the-art aberration-correction for only the field-dependent aberrations. As such, the additional computational load of the distortion correction steps is relatively minor.

In an embodiment, e.g., in the context of incoherent imaging where no phase information of the object field amplitude is available, an embodiment may comprise only steps 620, 630 and 640.

In an embodiment, the proposed distortion corrections for the particular non-isoplanatic aberrations correctable by the proposed methods disclosed herein are non-iterative distortion corrections (e.g., implemented by simple operations) which can be performed quickly with minimal computational burden. Each said distortion correction may comprise a single distortion correction for all of the first class of non-isoplanatic aberrations or second class of non-isoplanatic aberrations, as is appropriate.

In the non-isoplanatic coherent imaging case (as applied in digital holographic microscopy, DHM) in Fourier Space $(\vec{G})$, the (complex-valued) coherent image field subject to non-isoplanatic aberration $\phi_{ima,coh}^{non-iso}(\vec{G})$ (as represented by the sideband of the Fourier transform of the hologram) may be described by:

$$\phi_{ima,coh}^{non-iso}(\vec{G}) = \int h(\vec{G};\vec{R})\,\phi_{obj}(\vec{R})\,d\vec{R}$$

where $h(\vec{G};\vec{R})$ is the 4D PSF (non-isoplanatic; mixed Fourier space (pupil) $\vec{G}$ & real space (field) $\vec{R}$ representation) and $\phi_{obj}(\vec{R})$ describes the object field or sample field (it is actually the modulation of a plane wave; and it is complex-valued).

The non-isoplanatic 4D PSF function may be described by:

$$h(\vec{G};\vec{R}) = e^{i\,W(\vec{G};\vec{R})}e^{i\vec{G}\cdot\vec{R}}$$

where $W(\vec{G};\vec{R})$ is the 4D phase aberration function (non-isoplanatic) already described.

The non-isoplanatic 4D aberration function $W(\vec{G};\vec{R})$, may be written in terms of possibly correctable aberrations:

$$W(\vec{G};\vec{R}) = \alpha(\vec{R}) + \beta(\vec{G})\vec{G}\cdot\vec{R} + \gamma(\vec{G}) + \omega(\vec{R})\,\vec{G}\cdot\vec{R} + \text{Any Other Terms}$$

where $\alpha(\vec{R})$ and $\gamma(\vec{G})$ represent aberrations which are always correctable via deconvolution (isoplanatic aberrations either in field space or in pupil space), while $\beta(\vec{G})$ and $\omega(\vec{R})$ present aberrations which are more difficult to correct (non-isoplanatic aberrations), where $\beta(\vec{G})$ represent those non-isoplanatic aberrations which may be correctable by distortion in the pupil plane and $\omega(\vec{R})$ represent those non-isoplanatic aberrations which may be correctable by distortion in the field plane.

However, not all of the aberrations represented in general by $\beta(\vec{G})$ and $\omega(\vec{R})$ can be simultaneously corrected using the techniques disclosed herein. Because of this, a decision as to which of these aberrations are to be corrected may be made. Two approaches are proposed for choosing which of these aberrations are to be corrected. A first approach, hereafter referred to as the Exclusive-OR approach, proposes correcting only all the aberrations represented by $\beta(\vec{G})$ or only all the aberrations represented by $\omega(\vec{R})$ (e.g., in addition to the isoplanatic aberrations $\alpha(\vec{R})$, $\gamma(\vec{G})$). A second approach, hereafter referred to as the Selective-AND approach, proposes correcting a proper subset of each of ω-type and β-type aberrations (i.e., a proper subset of said first class of non-isoplanatic aberrations and a proper subset of said second class of non-isoplanatic aberrations respectively).

The Exclusive-OR approach and Selective-AND approach can be understood to be special cases of the more generalized concept of the correctable aberrations expressed by the aberrated phase function argument $\vec{R}'(\vec{R})\cdot\vec{G}'(\vec{G})$, and follow from choosing $\vec{G}'(\vec{G})$ and $\vec{R}'(\vec{R})$ appropriately.

Considering the Exclusive-OR technique, the (complex-valued) coherent image field subject to non-isoplanatic aberration may be described by:

$$\phi_{ima,coh}^{non-iso}(\vec{G}) = e^{i\gamma(\vec{G})}\int e^{i\vec{G}\cdot\vec{R}\left(1+\beta(\vec{G})+\omega(\vec{R})\right)}\left[e^{i\alpha(\vec{R})}\,\phi_{obj}(\vec{R})\right]d\vec{R}$$

In this embodiment, it is proposed that aberration correction may be performed on only one of the following two options:

$$\phi_{ima,coh}^{non-iso}(\vec{G}) = e^{i\gamma(\vec{G})} \int e^{i\vec{G}\cdot\vec{R}\left(1+\beta(\vec{G})\right)} \left[ e^{i\alpha(\vec{R})} \phi_{obj}(\vec{R}) \right] d\vec{R};$$

or

$$\phi_{ima,coh}^{non-iso}(\vec{G}) = e^{i\gamma(\vec{G})} \int e^{i\vec{G}\cdot\vec{R}\left(1+\omega(\vec{R})\right)} \left[ e^{i\alpha(\vec{R})} \phi_{obj}(\vec{R}) \right] d\vec{R}$$

where the aberrations represented by $e^{i\gamma(\vec{G})}$ can be corrected by deconvolution in the pupil plane, aberrations represented by $e^{i\alpha(\vec{R})}$ can be corrected by deconvolution in the field plane and: either the aberrations represented $e^{i\vec{G}\cdot\vec{R}(1+\beta(\vec{G}))}$ can be corrected by a distortion correction in the pupil plane or the aberrations represented $e^{i\vec{G}\cdot\vec{R}(1+\omega(\vec{R}))}$ can be corrected by a distortion correction in the field plane.

For the Selective-AND technique, the coherent image field $\phi_{ima,coh}^{non-iso}(\vec{G})$ described above may comprise an approximate factorization of $1 + \beta(\vec{G}) + \omega(\vec{R})$ into two scalar functions $f_1(\vec{R})$, $f_2(\vec{G})$, which are correctable by a distortion correction in the field plane and the pupil plane respectively; i.e.,:

$$\phi_{ima,coh}^{non-iso}(\vec{G}) = e^{i\gamma(\vec{G})} \int e^{i\vec{G}\cdot\vec{R}\left(1+\beta(\vec{G})+\omega(\vec{R})\right)} \left[ e^{i\alpha(\vec{R})} \phi_{obj}(\vec{R}) \right] d\vec{R}$$

becomes:

$$\phi_{ima,coh}^{non-iso}(\vec{G}) = e^{i\gamma(\vec{G})} \int e^{i\vec{G}\cdot\vec{R}} f_1(\vec{R}) f_2(\vec{G}) \left[ e^{i\alpha(\vec{R})} \phi_{obj}(\vec{R}) \right] d\vec{R}$$

where:

$$\vec{R'}(\vec{R}) = f_1(\vec{R}) \vec{R}$$

$$\vec{G'}(\vec{G}) = f_2(\vec{G}) \vec{G}$$

Distortion correction of $f_1(\vec{R})$ in the field (this is actually done after the inverse FFT step, but shown here for brevity) and of $f_2(\vec{G})$ in the pupil yields:

$$\phi_{ima,coh}^{non-iso}(\vec{G}) = e^{i\gamma(\vec{G})} \int e^{i\vec{G'}\cdot\vec{R'}} \phi_{obj}^{\alpha, Rdc}(\vec{R'}) \left|\frac{\partial\vec{R}}{\partial\vec{R'}}\right| d\vec{R'}$$

where $\phi_{obj}^{\alpha}(\vec{R}) = e^{i\alpha(\vec{R})} \phi_{obj}(\vec{R})$. Preparation for deconvolution in the pupil, yields:

$$\phi_{ima,coh}^{non-iso}(\vec{G}) = e^{i\gamma(\vec{G})} \phi_{obj}^{\alpha, Rdc}(\vec{G'}) = e^{i\gamma(\vec{G})} \phi_{obj}^{\alpha, Rdc,Gdc}(\vec{G})$$

and deconvolution in the pupil yields:

$$\phi_{obj}^{\alpha, Rdc,Gdc}(\vec{G}) = \phi_{ima,coh}^{non-iso}(\vec{G}) e^{-i\gamma(\vec{G})}$$

Inverse FFT to the field domain yields:

$$\phi_{obj}^{\alpha, Rdc, Gdc}\left(\vec{R}\right)$$

and the deconvolution in the field yields:

$$\phi_{obj}\left(\vec{R}\right) = \phi_{obj}^{\alpha, Rdc, Gdc}\left(\vec{R}\right) e^{-i\alpha'\left(\vec{R}\right)}$$

where $\phi_{otj}(\vec{R})$ is the aberration corrected object field.

Considering the factorization step of this embodiment, a first example will not account for the aberration described by wavefront aberration coefficient Will (tilt) (i.e., under an assumption that W111=0).

Factorization of $\vec{G} \cdot \vec{R}\,(1 + \beta(\vec{G}) + \omega(\vec{R}))$ : without W111

$$\phi_{ima,coh}^{non-iso}\left(\vec{G}\right) = e^{i\gamma\left(\vec{G}\right)} \int e^{i\vec{G}\cdot\vec{R}\left(1+\beta\left(\vec{G}\right)+\omega\left(\vec{R}\right)\right)} \left[e^{i\alpha\left(\vec{R}\right)} \phi_{obj}\left(\vec{R}\right)\right] d\vec{R}$$

$$\vec{G} \cdot \vec{R}\left(1 + \beta\left(\vec{G}\right) + \omega\left(\vec{R}\right)\right) = \vec{G} \cdot \vec{R}\,(1 + W_{131}G^2)(1 + W_{151}G^4)(1 + W_{311}R^2)(1 + W_{511}R^4)$$

where $(1 + W_{131}G^2)(1 + W_{151}G^4)$ can be corrected via pupil distortion and $(1 + W_{311}R^2)(1 + W_{511}R^4)$ can be corrected by field distortion.

A further example will include wavefront aberration coefficient Will:

$$\phi_{ima,coh}^{non-iso}\left(\vec{G}\right) = e^{i\gamma\left(\vec{G}\right)} \int e^{i\vec{G}\cdot\vec{R}\left(1+W_{111}+\beta\left(\vec{G}\right)+\omega\left(\vec{R}\right)\right)} \left[e^{i\alpha\left(\vec{R}\right)} \phi_{obj}\left(\vec{R}\right)\right] d\vec{R}$$

$$\vec{G} \cdot \vec{R}\left(1 + W_{111} + \beta\left(\vec{G}\right) + \omega\left(\vec{R}\right)\right) =$$

$$\vec{G} \cdot \vec{R}\,(1 + W_{111})\left(1 + \frac{W_{131}}{1+W_{111}}\,G^2\right)\left(1 + \frac{W_{151}}{1+W_{111}}\,G^4\right)\left(1 + \frac{W_{311}}{1+W_{111}}\,R^2\right)\left(1 + \frac{W_{511}}{1+W_{111}}\,R^4\right)$$

where $(1 + W_{111})\left(1 + \frac{W_{131}}{1+W_{111}}\,G^2\right)\left(1 + \frac{W_{151}}{1+W_{111}}\,G^4\right)$ can be corrected via pupil distortion and $\left(1 + \frac{W_{311}}{1+W_{111}}\,R^2\right)\left(1 + \frac{W_{511}}{1+W_{111}}\,R^4\right)$ can be corrected via field distortion.

Using these techniques, at least for the coherent case as applies to digital holographic microscopy (DHM), the proposed method enables correction of aberrations Will (magnification), W311 (distortion), W511 (higher order distortion) represented by $\omega(\vec{R})\,\vec{G} \cdot \vec{R}$, aberrations W131 (coma), W151 (higher order coma) represented by $\beta(\vec{G})\vec{G} \cdot \vec{R}$, and (at least under some conditions) some higher order terms including W331 (6th order coma) and W551. This is in addition to the isoplanatic aberrations; e.g., the aberrations represented by $\alpha(\vec{R})$ (W200, W400, W600, known as piston aberrations) and $\gamma(\vec{G})$ (W020, W040, W060, known as focus, aspherical aberration and higher order spherical aberration, respectively). This is only the axially symmetric 4D aberrations which are correctable using the methods disclosed herein; a similar approach for the non-axially symmetric aberrations, where each non-isoplanatic field-dependent aberration has its own "origin" in field space (known as "nodal point"), is a straightforward extension of the above formulation with all nodal points residing in the very same location.

As briefly mentioned above, non-isoplanatic aberrations in the incoherent imaging regime may also be corrected using the methods disclosed herein. In such an embodiment, only those non-isoplanatic aberrations represented by

$\omega(\vec{R})\,\vec{G}\cdot\vec{R}$ (e.g., W111, W311, W511) are correctable (e.g., non-iteratively such as by applying a distortion at the field plane) as there is no access to the pupil plane to correct the aberrations represented by $\beta(\vec{G})\vec{G}\cdot\vec{R}$ (e.g., W131 (coma), W151 (higher order coma) or the other higher order aberrations). All of the specific aberrations mentioned herein are described in the book: Jose Sasian, Introduction to Aberrations in Optical Imaging Systems (Cambridge University Press, 2013), which is incorporated herein by reference.

The incoherent image field $I_{ima,inc}^{non-iso}(\vec{G})$ with Image Intensity after Fourier transformation to Fourier Space ($\vec{G}$) may be described by:

$$I_{ima,inc}^{non-iso}(\vec{G}) = \int\int h\left(\vec{G}+\vec{G'};\vec{R}\right) h^*\left(\vec{G'};\vec{R}\right) d\vec{G'}\left|\phi_{obj}(\vec{R})\right|^2 d\vec{R}$$

With, for the non-isoplanatic 4D PSF function:

$$h\left(\vec{G};\vec{R}\right) = e^{i\,W(\vec{G};\vec{R})}e^{i\vec{G}\cdot\vec{R}}$$

As before, the non-isoplanatic 4D aberration function in terms of possibly correctable aberrations comprises:

$$W(\vec{G};\vec{R}) = \alpha(\vec{R}) + \beta(\vec{G})\,\vec{G}\cdot\vec{R} + \gamma(\vec{G}) + \omega(\vec{R})\,\vec{G}\cdot\vec{R} + \text{Any Other Terms}$$

and therefore:

$$I_{ima,inc}^{non-iso}(\vec{G}) = \int\left|\phi_{obj}(\vec{R})\right|^2 d\vec{R}\, e^{i\vec{G}\cdot\vec{R}\,(1+\omega(\vec{R}))}\int e^{i\,[\gamma(\vec{G}+\vec{G'})-\gamma(\vec{G'})]}e^{i\,[\beta(\vec{G}+\vec{G'})(\vec{G}+\vec{G'})\cdot\vec{R}-\beta(\vec{G'})\vec{G'}\cdot\vec{R}]}d\vec{G'}$$

In this case, $e^{i[\beta(\vec{G}+\vec{G'})(\vec{G}+\vec{G'})\cdot\vec{R}-\beta(\vec{G'})\vec{G'}\cdot\vec{R}]}$ is not correctable due to the lack of access to the pupil plane. $e^{i\vec{G}\cdot\vec{R}\,(1+\omega(\vec{R}))}$ is correctable via field distortion and $e^{i[\gamma(\vec{G}+\vec{G'})-\gamma(\vec{G'})]}$ is correctable via deconvolution.

The aberration correction concepts described above are generally applicable to imaging and metrology applications. However, in an embodiment, they have a specific purpose of enabling a simplified optical arrangement for a metrology tool such as illustrated in Figure 4 or 5(a); e.g., to replace the objective lens system of such a metrology tool. For example, such an objective lens system may comprise a compact arrangement having fewer than 5, fewer than 4 or fewer than 3 non-planar optical elements or lens elements. A specific (transmissive) example may comprise only two lens elements, each having an aspheric surface and a spherical surface. In the context of this disclosure, a lens element may comprise a transmissive lens element or a reflective lens element; i.e., any non-planar optical element.

In particular, it is desirable that such a lens system has a large numerical aperture (NA); e.g., an NA greater than 0.7, greater than 0.75, greater than 0.8, greater than 0.85 or greater than 0.9.

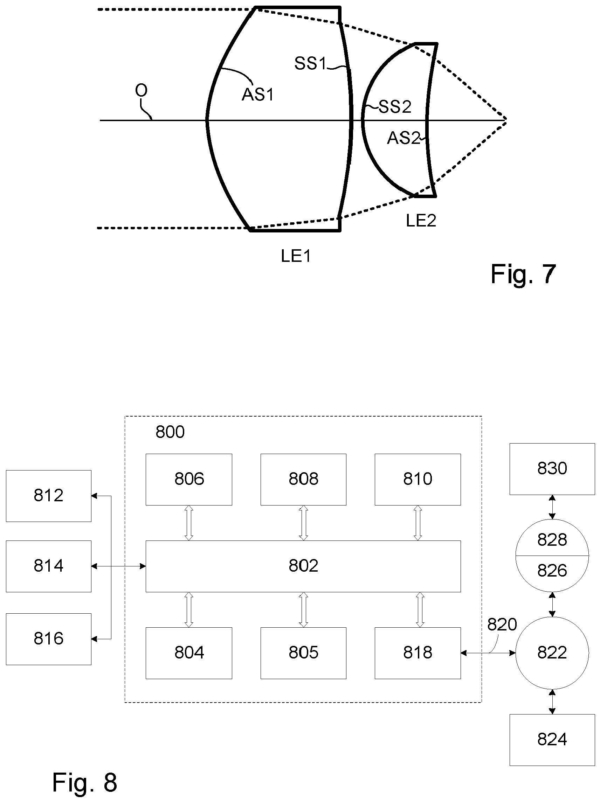

Figure 7 is a schematic illustration of an embodiment of a lens system comprising only two lens elements. A first lens element LEI comprises a first aspheric surface AS1 and first spherical surface SS1. A second lens element LE2 comprises a second aspheric surface AS2 and second spherical surface SS2. In this arrangement, the spherical surfaces SS1, SS2 are mutually facing, with the aspheric surfaces forming the input and output surfaces of the system. The dotted lines are exemplary rays through the system.

It may be appreciated that such a simple objective lens system comprising fewer than 5, fewer than 4 or fewer than 3 optical elements cannot be manufactured without some aberrations including significant non-isoplanatic aberrations. As such, their use in precision metrology such as required for lithographic monitoring requires corrections for such non-isoplanatic aberrations. The concepts disclosed herein enable their use for such precision metrology applications.

In an embodiment, the lens system may comprise only correctable non-isoplanatic aberrations, i.e., aberrations correctable by the methods disclosed herein (i.e., those which meet the criterion $W(\vec{R},\vec{G}) = \vec{R'}(\vec{R})\cdot\vec{G'}(\vec{G}) - \vec{R}\cdot\vec{G}$). Non-isoplanatic aberrations that fall outside the group are substantially absent in the lens system, such that the objective lens system has negligible non-isoplanatic aberrations. Negligible non-isoplanatic aberrations in this context means negligible according to the Maréchal criterion. The Maréchal criterion is defined in the book Principles of optics by Max Born and Emile Wolf Cambridge University Press edition 7 (1999) on page 528; ISBN 9780521642224. Based on this, a Maréchal system is well-corrected (and therefore there is negligible non-isoplanatic aberrations) when the normalized intensity at the diffraction focus is equal or greater than 0.8. This happens when the root mean square departure of the wavefront from the reference sphere is smaller than $\lambda/14$, where $\lambda/14$ is $0.071\lambda$ or 71 milliwaves. In this respect, the lens system may comprise aberration performance for non-isoplanatic aberrations not correctable using the methods disclosed herein that is within at least 71 milliwaves, and preferably better say 50 milliwaves or better than 30 milliwaves within the field of view of the objective lens. Similarly, the aberrations corrected using the methods disclosed herein may be corrected according to the same criterion.

In an embodiment, the aberration correction techniques disclosed herein may be implemented in real-time, where real-time in this context means sufficiently fast for metrology applications in a high volume manufacturing (HVM) manufacturing environment.

It can be appreciated that the non-iterative aberration correction methods described herein may be subsequently followed by an iterative aberration correction procedure to address dealing any remaining non-isoplanatic aberrations.

While the above examples are described in terms of a metrology tool for measuring overlay and more generally in terms of monitoring lithographic processes in manufacture of integrated circuits, the concepts disclosed herein are not so limited. The metrology tool disclosed herein may be used to measure any characteristic of interest of a structure such as a target, such as focus, dose, critical dimension and EPE (Edge Placement Error), which is a more complex form of overlay (e.g., a combination of overlay and critical dimension uniformity). The metrology tool disclosed herein may be equally used to measure other samples or objects in contexts separate from lithography and IC manufacture.

Figure 8 is a block diagram that illustrates a computer system 800 that may assist in implementing the methods and flows disclosed herein. Computer system 800 includes a bus 802 or other communication mechanism for communicating information, and a processor 804 (or multiple processors 804 and 805) coupled with bus 802 for processing information. Computer system 800 also includes a main memory 806, such as a random access memory (RAM) or other dynamic storage device, coupled to bus 802 for storing information and instructions to be executed by processor 804. Main memory 806 also may be used for storing temporary variables or other intermediate information during execution of instructions to be executed by processor 804. Computer system 800 further includes a read only memory (ROM) 808 or other static storage device coupled to bus 802 for storing static information and instructions for processor 804. A storage device 810, such as a magnetic disk or optical disk, is provided and coupled to bus 802 for storing information and instructions.

Computer system 800 may be coupled via bus 802 to a display 812, such as a cathode ray tube (CRT) or flat panel or touch panel display for displaying information to a computer user. An input device 814, including alphanumeric and other keys, is coupled to bus 802 for communicating information and command selections to processor 804. Another type of user input device is cursor control 816, such as a mouse, a trackball, or cursor direction keys for communicating direction information and command selections to processor 804 and for controlling cursor movement on display 812. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 800 in response to processor 804 executing one or more sequences of one or more instructions contained in main memory 806. Such instructions may be read into main memory 806 from another computer-readable medium, such as storage device 810. Execution of the sequences of instructions contained in main memory 806 causes processor 804 to perform the process steps described herein. One or more processors in a multiprocessing arrangement may also be employed to execute the sequences of instructions contained in main memory 806. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 804 for execution. Such a medium may take many forms, including but not limited to, non-volatile media, volatile media, and transmission media. Non-volatile media include, for example, optical or magnetic disks, such as storage device 810. Volatile media include dynamic memory, such as main memory 806. Transmission media include coaxial cables, copper wire and fiber optics, including the wires that comprise bus 802. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 804 for execution. For example, the instructions may initially be borne on a magnetic disk of a remote computer. The remote computer can load the instructions into its dynamic memory and send the instructions over a telephone line using a modem. A modem local to computer system 800 can receive the data on the telephone line and use an infrared transmitter to convert the data to an infrared signal. An infrared detector coupled to bus 802 can receive the data carried in the infrared signal and place the data on bus 802. Bus 802 carries the data to main memory 806, from which processor 804 retrieves and executes the instructions. The instructions received by main memory 806 may optionally be stored on storage device 810 either before or after execution by processor 804.

Computer system 800 also preferably includes a communication interface 818 coupled to bus 802. Communication interface 818 provides a two-way data communication coupling to a network link 820 that is connected to a local network 822. For example, communication interface 818 may be an integrated services digital network (ISDN) card or a modem to provide a data communication connection to a corresponding type of telephone line. As another example, communication interface 818 may be a local area network (LAN) card to provide a data communication connection to a compatible LAN. Wireless links may also be implemented. In any such implementation, communication interface 818 sends and receives electrical, electromagnetic or optical signals that carry digital data streams representing various types of information.

Network link 820 typically provides data communication through one or more networks to other data devices. For example, network link 820 may provide a connection through local network 822 to a host computer 824 or to data equipment operated by an Internet Service Provider (ISP) 826. ISP 826 in turn provides data communication services through the worldwide packet data communication network, now commonly referred to as the "Internet" 828. Local network 822 and Internet 828 both use electrical, electromagnetic or optical signals that carry digital data streams. The signals through the various networks and the signals on network link 820 and through communication interface 818, which carry the digital data to and from computer system 800, are exemplary forms of carrier waves transporting the information.

Computer system 800 may send messages and receive data, including program code, through the network(s), network link 820, and communication interface 818. In the Internet example, a server 830 might transmit a requested code for an application program through Internet 828, ISP 826, local network 822 and communication interface 818. One such downloaded application may provide for one or more of the techniques described herein, for example. The received code may be executed by processor 804 as it is received, and/or stored in storage device 810, or other non-volatile storage for later execution. In this manner, computer system 800 may obtain application code in the form of a carrier wave.

Further embodiments are disclosed in the subsequent list of numbered clauses:

1. A metrology method comprising:

obtaining a first image, said first image being subject to one or more non-isoplanatic aberrations of an optical system used to capture said image; and
non-iteratively correcting said first image for the effect of at least said one or more non-isoplanatic aberrations by performing one or both of:

a field non-isoplanatic correction operation in field space for said first image, said field space corresponding to a field plane of the optical system; and
a pupil non-isoplanatic correction operation in pupil space for said first image, said pupil space corresponding to a pupil plane of the optical system;

wherein said one or more non-isoplanatic aberrations comprise a class of non-isoplanatic aberrations describable as a convolution combined with an object distortion and/or a pupil distortion.

2. A method as defined in clause 1, wherein said performing at least one non-isoplanatic correction operation comprises performing one or both of:

said field non-isoplanatic correction operation for to correct for the effect of a first class of non-isoplanatic aberrations; and
said pupil non-isoplanatic correction operation to correct for the effect of a second class of non-isoplanatic aberrations.

3. A method as defined in clause 2, wherein said first class of non-isoplanatic aberrations comprise said non-isoplanatic aberrations which are correctable by distortion in said field space and said second class of non-isoplanatic aberrations comprise said non-isoplanatic aberrations which are correctable by distortion in said pupil space.

4. A method as defined in clause 2 or 3, comprising performing only said field non-isoplanatic correction operation to correct for the effect of only said first class of non-isoplanatic aberrations or only said pupil non-isoplanatic correction operation to for the effect of only said second class of non-isoplanatic aberrations.

5. A method as defined in clause 2 or 3, comprising correcting a proper subset of said first class of non-isoplanatic aberrations and a proper subset of said second class of non-isoplanatic aberrations.

6. A method as defined in clause 5, wherein said proper subsets are determined by an approximate factorization of a description of said non-isoplanatic aberrations into a first scalar function of field coordinates and a second scalar function of pupil coordinates.

7. A method as defined in clause 5 or 6, wherein said first image comprises a complex field representation, and the method comprises:

performing a forward Fourier transform of said first image to obtain a transformed image;
performing said pupil non-isoplanatic correction operation to correct the proper subset of said second class of non-isoplanatic aberrations in pupil space;
performing a backward Fourier transform to a field representation; and
performing said field non-isoplanatic correction operation to correct the proper subset of said first class of non-isoplanatic aberrations in field space.

8. A method as defined in clause 5 or 6, wherein the method comprises: performing said pupil non-isoplanatic correction operation to correct the proper subset of said second class of non-isoplanatic aberrations and performing said field non-isoplanatic correction operation to correct the proper subset of said first class of non-isoplanatic aberrations in a single correction operation.

9. A method as defined in clause 8, wherein said first image is obtained using coherent measurement radiation.

10. A method as defined in any preceding clause, wherein said at least one non-isoplanatic correction operation comprises a distortion operation.

11. A method as defined in any preceding clause, comprising subsequently performing an iterative aberration correction procedure to correct for any remaining non-isoplanatic aberrations.

12. A method as defined in any preceding clause, further comprising correcting for at least one isoplanatic aberration.

13. A method as defined in clause 12, comprising correcting a first class of isoplanatic aberrations correctable by performing at least one isoplanatic correction operation in said field space and/or a second class of isoplanatic aberrations correctable by performing at least one isoplanatic correction operation in a said pupil space.

14. A method as defined in clause 12 or 13, wherein said at least one isoplanatic correction operation comprises a deconvolution.

15. A method as defined in any preceding clause, wherein said first image comprises an image of a structure formed on a substrate by a lithographic process.

16. A method as defined in any preceding clause, wherein said optical system comprises an objective lens system having fewer than five lens elements.

17. A method as defined in clause 16, wherein said objective lens system comprises fewer than three lens elements.

18. A method as defined in clause 16 or 17, wherein said objective lens system comprises a numerical aperture greater than 0.7.

19. A computer program comprising program instructions operable to perform the method of any of any of clauses 1 to 15, when run on a suitable apparatus.

20. A non-transient computer program carrier comprising the computer program of clause 19.

21. A processing arrangement comprising:

the non-transient computer program carrier of clause 20; and
a processor operable to run the computer program comprised on said non-transient computer program carrier.

22. A metrology device operable to measure at least one structure on a substrate, comprising:

a processing arrangement as defined in clause 21;
said processing arrangement being operable to perform the method of any of any of clauses 1 to 15.

23. A metrology device as defined in clause 22, comprising:

an objective lens system for collecting scattered radiation, having been scattered by a sample; and
a detector operable to detect an image from said scattered radiation collected by the objective lens system.

24. A metrology device as defined in clause 23, wherein said objective lens system comprises negligible non-isoplanatic aberrations other than those of said class of non-isoplanatic aberrations describable as a convolution combined with an object distortion and/or a pupil distortion

25. A metrology device as defined in clause 23 or 24, wherein said objective lens system comprises fewer than five lens elements.

26. A metrology device as defined in clause 23 or 24, wherein said objective lens system comprises fewer than three lens elements.

27. A metrology device as defined in clause 26, comprising two lens elements, each lens element comprising a spherical surface and an aspheric surface.

28. A metrology device as defined in clause 27, wherein the spherical surfaces of the lens elements are mutually facing.

29. A metrology device as defined in any of clauses 23 to 28, wherein said objective lens system comprises a numerical aperture greater than 0.7.

30. A metrology device as defined in any of clauses 23 to 28, wherein said objective lens system comprises a numerical aperture greater than 0.8.

31. An objective lens system comprising:

A plurality of non-planar optical elements or lens elements numbering fewer than five non-planar optical elements or lens elements; and

negligible non-isoplanatic aberrations other than those of a class of non-isoplanatic aberrations describable as a convolution combined with an object distortion and/or a pupil distortion.

32. An objective lens system as defined in clause 31, wherein said objective lens system comprises fewer than non-planar optical elements or three lens elements.

33. An objective lens system as defined in clause 32, comprising two lens elements, each lens element comprising a spherical surface and an aspheric surface.

34. An objective lens system as defined in clause 33, wherein the spherical surfaces of the lens elements are mutually facing.

35. An objective lens system as defined in any of clauses 31 to 34, wherein said objective lens system comprises a numerical aperture greater than 0.7.

36. An objective lens system as defined in any of clauses 31 to 34, wherein said objective lens system comprises a numerical aperture greater than 0.8.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of an inspection or metrology apparatus, embodiments of the invention may be used in other apparatus. Embodiments of the invention may form part of a mask inspection apparatus, a lithographic apparatus, or any apparatus that measures or processes an object such as a wafer (or other substrate) or mask (or other patterning device). The term "metrology apparatus" may also refer to an inspection apparatus or an inspection system. E.g. the inspection apparatus that comprises an embodiment of the invention may be used to detect defects of a substrate or defects of structures on a substrate. In such an embodiment, a characteristic of interest of the structure on the substrate may relate to defects in the structure, the absence of a specific part of the structure, or the presence of an unwanted structure on the substrate.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

Although specific reference may have been made above to the use of embodiments of the invention in the context of optical lithography, it will be appreciated that the invention, where the context allows, is not limited to optical lithography and may be used in other applications, for example imprint lithography.

While the targets or target structures (more generally structures on a substrate) described above are metrology target structures specifically designed and formed for the purposes of measurement, in other embodiments, properties of interest may be measured on one or more structures which are functional parts of devices formed on the substrate. Many devices have regular, grating-like structures. The terms structure, target grating and target structure as used herein do not require that the structure has been provided specifically for the measurement being performed. Further, pitch P of the metrology targets may be close to the resolution limit of the optical system of the scatterometer or may be smaller, but may be much larger than the dimension of typical product features made by lithographic process in the target portions C. In practice the lines and/or spaces of the overlay gratings within the target structures may be made to include smaller structures similar in dimension to the product features.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A metrology method comprising:

   obtaining a first image, said first image being subject to one or more non-isoplanatic aberrations of an optical system used to capture said image; and
   non-iteratively correcting said first image for the effect of at least said one or more non-isoplanatic aberrations by performing one or both of:

   a field non-isoplanatic correction operation in field space for said first image, said field space corresponding to a field plane of the optical system; and
   a pupil non-isoplanatic correction operation in pupil space for said first image, said pupil space corresponding to a pupil plane of the optical system;

   wherein said one or more non-isoplanatic aberrations comprise a class of non-isoplanatic aberrations describable as a convolution combined with an object distortion and/or a pupil distortion.

2. A method as claimed in claim 1, wherein said performing at least one non-isoplanatic correction operation comprises performing one or both of:

   said field non-isoplanatic correction operation for to correct for the effect of a first class of non-isoplanatic aberrations; and
   said pupil non-isoplanatic correction operation to correct for the effect of a second class of non-isoplanatic aberrations.

3. A method as claimed in claim 2, wherein said first class of non-isoplanatic aberrations comprise said non-isoplanatic aberrations which are correctable by distortion in said field space and said second class of non-isoplanatic aberrations comprise said non-isoplanatic aberrations which are correctable by distortion in said pupil space.

4. A method as claimed in claim 2 or 3, comprising performing only said field non-isoplanatic correction operation to correct for the effect of only said first class of non-isoplanatic aberrations or only said pupil non-isoplanatic correction operation to for the effect of only said second class of non-isoplanatic aberrations.

5. A method as claimed in claim 2 or 3, comprising correcting a proper subset of said first class of non-isoplanatic aberrations and a proper subset of said second class of non-isoplanatic aberrations.

6. A method as claimed in claim 5, wherein said proper subsets are determined by an approximate factorization of a description of said non-isoplanatic aberrations into a first scalar function of field coordinates and a second scalar function of pupil coordinates.

7. A method as claimed in claim 5 or 6, wherein said first image comprises a complex field representation, and the method comprises:

   performing a forward Fourier transform of said first image to obtain a transformed image;
   performing said pupil non-isoplanatic correction operation to correct the proper subset of said second class of non-isoplanatic aberrations in pupil space;
   performing a backward Fourier transform to a field representation; and
   performing said field non-isoplanatic correction operation to correct the proper subset of said first class of non-isoplanatic aberrations in field space.

8. A method as claimed in claim 5 or 6, wherein the method comprises: performing said pupil non-isoplanatic correction operation to correct the proper subset of said second class of non-isoplanatic aberrations and performing said field non-isoplanatic correction operation to correct the proper subset of said first class of non-isoplanatic aberrations in a single correction operation.

9. A method as claimed in any preceding claim, wherein said at least one non-isoplanatic correction operation comprises a distortion operation.

10. A method as claimed in any preceding claim, further comprising correcting for at least one isoplanatic aberration.

11. A method as claimed in claim 10, comprising correcting a first class of isoplanatic aberrations correctable by performing at least one isoplanatic correction operation in said field space and/or a second class of isoplanatic aberrations correctable by performing at least one isoplanatic correction operation in a said pupil space.

12. A method as claimed in any preceding claim, wherein said first image comprises an image of a structure formed on a substrate by a lithographic process.

13. A method as claimed in any preceding claim, wherein said optical system comprises an objective lens system having fewer than five lens elements.

14. A metrology device operable to measure at least one structure on a substrate, comprising:

    a processing arrangement comprising i) a non-transient computer program carrier comprising a computer program comprising program instructions operable to perform the method of any claims 1 to 13, and ii) a processor operable to run the computer program comprises on said transient computer program carrier;
    said processing arrangement being operable to perform the method of any of any of claims 1 to 13.

15. An objective lens system comprising:

    a plurality of non-planar optical elements or lens elements numbering fewer than five non-planar optical elements or lens elements; and
    negligible non-isoplanatic aberrations other than those of a class of non-isoplanatic aberrations describable as a convolution combined with an object distortion and/or a pupil distortion.

Fig. 1

Fig. 2

Fig. 3

Fig. 4

Fig. 5

Fig. 6

**Fig. 7**

**Fig. 8**

Europäisches
Patentamt

European
Patent Office

Office européen
des brevets

# EUROPEAN SEARCH REPORT

**Application Number**

EP 21 20 9476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/218684 A1 (KUMAR ABHISHEK [AT] ET AL) 7 August 2014 (2014-08-07) | 1-5,9-15 | INV.<br>G06T5/00 |
| A | * paragraph [0008] – paragraph [0070] *<br>* figures 11, 14 * | 6-8 | G06T5/10 |
| A | US 2019/146356 A1 (PANDEY NITESH [NL] ET AL) 16 May 2019 (2019-05-16)<br>* paragraph [0008] – paragraph [0011] *<br>* paragraph [0069] – paragraph [0101] * | 1-15 | |
| A | US 2019/310559 A1 (DE BOER JOHANNES FITZGERALD [NL] ET AL) 10 October 2019 (2019-10-10)<br>* paragraph [0005] – paragraph [0023] *<br>* paragraph [0050] – paragraph [0056] *<br>* paragraph [0112] – paragraph [0120] * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 4 May 2022 | Maier, Werner |

EPO FORM 1503 03.82 (P04C01)

**ANNEX TO THE EUROPEAN SEARCH REPORT
ON EUROPEAN PATENT APPLICATION NO.**

EP 21 20 9476

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2022

| Patent document cited in search report | | Publication date | Patent family member(s) | | Publication date |
|---|---|---|---|---|---|
| US 2014218684 | A1 | 07-08-2014 | EP | 2951648 A1 | 09-12-2015 |
| | | | JP | 6412017 B2 | 24-10-2018 |
| | | | JP | 2016504947 A | 18-02-2016 |
| | | | US | 2014218684 A1 | 07-08-2014 |
| | | | US | 2016000319 A1 | 07-01-2016 |
| | | | US | 2018035883 A1 | 08-02-2018 |
| | | | WO | 2014118325 A1 | 07-08-2014 |
| US 2019146356 | A1 | 16-05-2019 | CN | 108139682 A | 08-06-2018 |
| | | | IL | 258057 A | 31-03-2020 |
| | | | KR | 20180059930 A | 05-06-2018 |
| | | | NL | 2017452 A | 11-04-2017 |
| | | | TW | 201721093 A | 16-06-2017 |
| | | | TW | 201816359 A | 01-05-2018 |
| | | | US | 2017097575 A1 | 06-04-2017 |
| | | | US | 2019146356 A1 | 16-05-2019 |
| | | | WO | 2017055072 A1 | 06-04-2017 |
| US 2019310559 | A1 | 10-10-2019 | CN | 112204473 A | 08-01-2021 |
| | | | JP | 2021520518 A | 19-08-2021 |
| | | | KR | 20210018212 A | 17-02-2021 |
| | | | NL | 2021848 A | 06-11-2018 |
| | | | TW | 202004356 A | 16-01-2020 |
| | | | TW | 202125121 A | 01-07-2021 |
| | | | US | 2019310559 A1 | 10-10-2019 |
| | | | US | 2021349403 A1 | 11-11-2021 |
| | | | WO | 2019197117 A1 | 17-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019197117 A1
- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 20190107781 A

### Non-patent literature cited in the description

- **JOSE SASIAN.** Introduction to Aberrations in Optical Imaging Systems. Cambridge University Press, 2013
- **MAX BORN ; EMILE WOLF.** Principles of optics. Cambridge University Press, 1999, 528